# EUROPEAN PATENT APPLICATION

(11) **EP 1 881 702 A1**
(43) Date of publication of application: **23.01.2008**
(21) Application number: 07111396.3
(22) Date of filing: 29.06.2007
(51) Int. Cl.: H04N 5/64

(54) **Frame structure**

(30) Priority: 19.07.2006 CN 200620121266 U
(71) Applicant: Chang, Fang-Yu, Gueishan Township, Taoyuan County (TW)
(72) Inventor: Chang, Fang-Yu, Gueishan Township, Taoyuan County (TW)
(74) Representative: Viering, Jentschura & Partner

(57) **Abstract**

A frame structure includes a frame and a holding apparatus. The frame has a frame hole to frame a flat panel display, and the holding apparatus includes a plurality of fixing components set on the back surface of the frame and a plurality of propping components configured on the fixing components. The propping components can be protruded toward the frame hole to prop the back shell of the flat panel display to prevent the frame from sliding.

## Description

### BACKGROUND OF THE INVENTION

### 1. FIELD OF THE INVENTION

The present invention relates to a frame structure, and more especially, to the frame structure applied to the flat panel display.

### 2. BACKGROUND OF THE RELATED ART

Because of the development and progress of the science and technology, the size of the flat panel display is getting larger to gradually realize the dream of the home theater. Arranging the big-size flat panel display in the house, people can enjoy the outstanding image performance and show their personal economic ability further.

However, the common flat panel display in the house may not match the original decoration of the house and affect the whole aesthetic feeling of the room decoration. Besides, because the cultural and ideological progress is taken importance gradually, the inconsistency between the flat panel display and the room decoration will affect the life quality of people.

### SUMMARY OF THE INVENTION

In order to solve the foregoing problems, one object of this invention is to provide a frame structure applied to the flat panel display, wherein the frame structure can be changed easily to beautify the flat panel display and will not affect the whole aesthetic feeling of the room decoration.

One object of this invention is to provide a frame structure having the strong combinative strength with the flat panel display.

One object of this invention is to provide a detachable frame structure, wherein the assembly between the frame and the flat panel display is simple for the user to change frequently depending on the like of the user, and so as to have the advantage of high practicability.

Accordingly, one embodiment of the present invention provides a frame structure, which includes: a frame having a frame hole to frame the flat panel display and expose a screen of the flat panel display and a holding apparatus including a plurality of fixing components set on a back surface of the frame; a plurality of propping components configured on the fixing components; and the propping components can be protruded out toward the frame hole to prop a back shell of the flat panel display.

### BRIEF DESCRIPTION OF THE DRAWINGS

Fig.1 is a diagram illustrating a frame structure in accordance with an embodiment of the present invention;
Fig.2 is a diagram illustrating the combination action of the frame structure and the flat panel display in accordance with an embodiment of the present invention;
Fig.3 is a rearview diagram illustrating the combination of the frame structure and the flat panel display in accordance with an embodiment of the present invention;
Fig.4 is a rearview diagram illustrating the combination of the frame structure and the flat panel display in accordance with another embodiment of the present invention; and
Fig.5 is a rearview diagram illustrating the combination of the frame structure and the flat panel display in accordance with another embodiment of the present invention.

### DETAILED DESCRIPTION OF THE INVENTION

The present invention provides a frame structure, which is used to combine with a flat panel display to raise the whole aesthetic feeling of the flat panel display. Some embodiments in the following are used to illustrate the characteristic of the present invention.

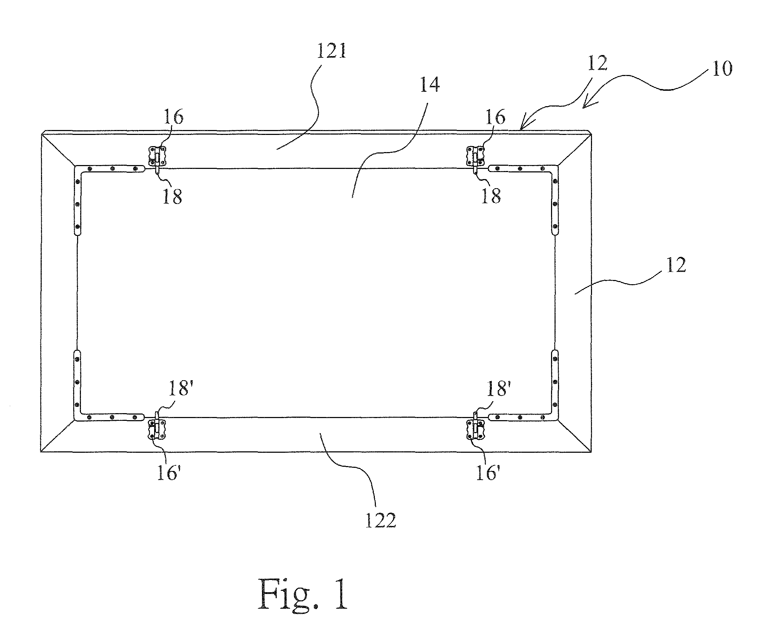

Fig.1 is a diagram illustrating a frame structure in accordance with an embodiment of the present invention. The frame structure 10 includes a frame 12 having a frame hole 14, whose size corresponds to the size of the front frame of the flat panel display, to make the frame 12 be able to frame the flat panel display and expose the screen of the flat panel display. A holding apparatus includes a plurality of fixing components and a plurality of propping components. In this embodiment, the plurality of fixing components are four lock bases 16, 16', and the plurality of propping components are four lock bolts 18, 18' configured through the four lock bases 16, 16', respectively. The lock bases 16, 16' are respectively configured on the top edge 121 and the bottom edge 122 of the back surface of the frame 12, and the lock bolts 18, 18' are respectively slid through the lock bases 16, 16' to protrude toward the frame hole 14.

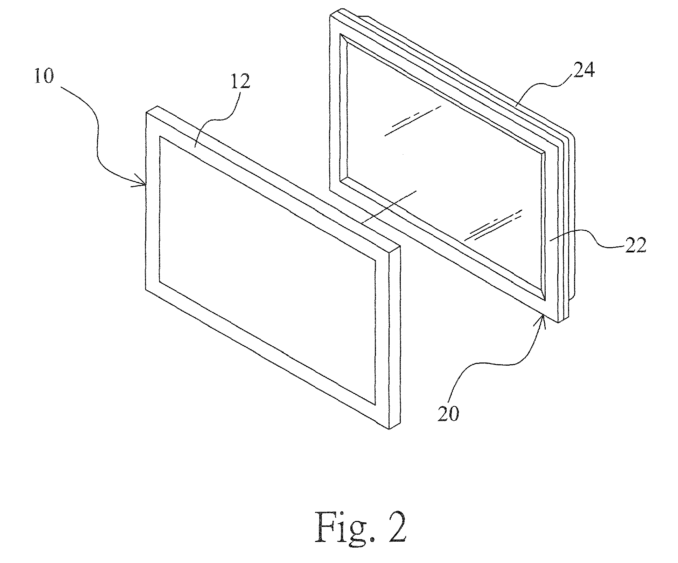

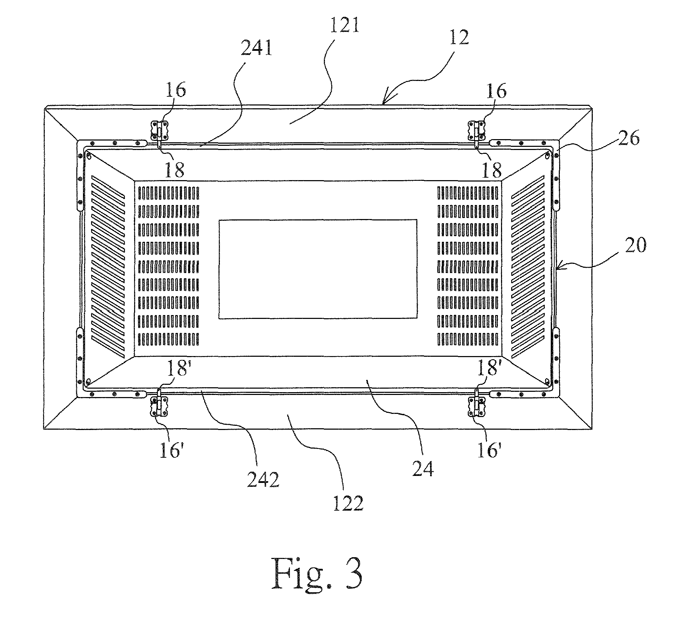

Continuously, Fig.2 is a diagram illustrating the combination action of the frame structure 10 and the flat panel display 20, wherein the frame 12 is configured on the flat panel display 20 from the front of the flat panel display 20 to frame the whole front frame 22 of the flat panel display 20. Please refer to Fig.3 simultaneously, the lock bolts 18 in the lock bases16 on the top edge 121 of the frame 12 are slide down to protrude and prop the top rim 241 of the back shell 24 of the flat panel display 20, and the lock bolts 18' in the lock bases 16' on the bottom edge 122 of the frame 12 are slide up to protrude and prop the bottom rim 242 of the back shell 24 of the flat panel display 20. Furthermore, the frame 12 is immovable because the lock bolts 18, 18' are propping against the back shell 24 of the flat panel display 20.

Wherein, four L-shape strips 26 are respectively fixed on four corners of the combinative places between the back surface of the frame 12 and the flat panel display 20 to improve the tightness between the frame 12 and the flat panel display 20 and to increase the holding ability of the frame 12.

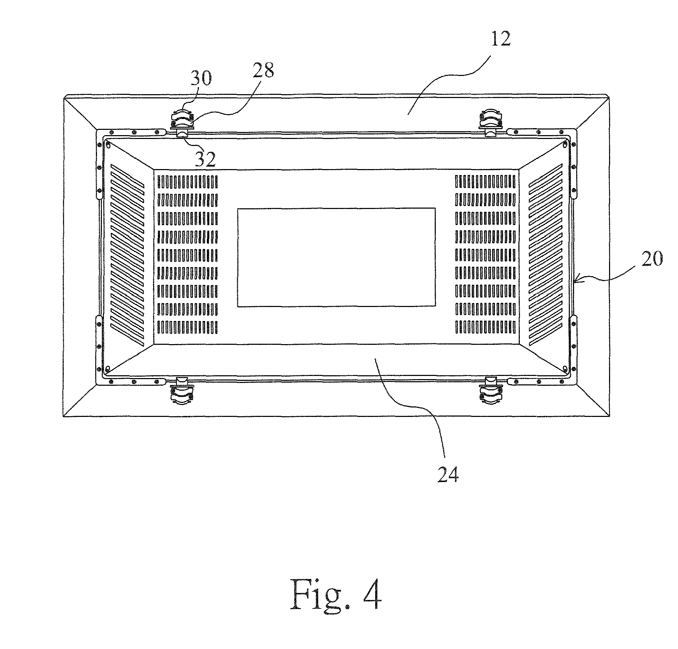

Furthermore, please refer to Fig.4, in another embodiment, the foregoing fixing components are four fixing rings 28 and the propping components are four cylindrical locks 30. The cylindrical locks 30 are configured through the four fixing rings 28 respectively, wherein the latch bolt 32 of each cylindrical lock 30 is toward the frame hole (not shown) and the retraction of the latch bolt 32 is adjusted. When the frame 12 is combined with the flat panel display 20, each latch bolt 32 is adjusted to protrude and prop the back shell 24 of the flat panel display 20, and so as to avoid the shift of the frame 12.

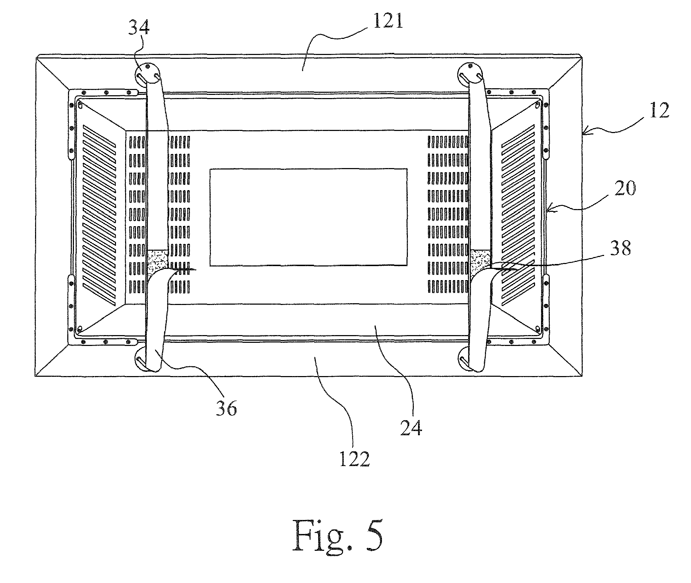

On the other hand, please refer to Fig.5, in another embodiment, the fixing components are four hangers 34 and the propping components are two straps 36 having Velcro 38 on their surfaces. The four hangers 34 are configured on the top edge 121 and the bottom edge 122 of the back surface of the frame 12. The two opposite ends of every strap 36 pass through the two hangers 34 respectively to make the strap 36 pass across the back shell 24 of the flat panel display 20, and after the strap 36 is adjusted to a suitable length, two ends of the strap 36 are connected by the Velcro 38. Because the straps 36 are configured across the back shell 24, the combinative strength between the frame 12 and the flat panel display 20 will increase effectively to avoid the frame 12 from shifting or separating from the flat panel display 20. Besides, the two opposite ends of each strap 36 can be directly fixed on the two hangers 34 respectively to make each strap 36 pass across the back shell 24 of the flat panel display 20.

To sum up, in the present invention, the flat panel display is assembled with a frame structure, and by changing the color, stripe, or shape of the frame, the inconsistency between the original flat panel display with the environment will be mitigated. Furthermore, the frame structure can be used to beautify the flat panel display and will not affect the whole aesthetic feeling of the room decoration. On the other hand, in the present invention, the assembly between the frame and the flat panel display is simple for the user to change frequently depending on the like of the user, and so as to have the advantage of high practicability. Furthermore, the strong combinative strength between the frame and the flat panel display will reduce the safety misgiving.

Although the present invention has been explained in relation to its preferred embodiment, it is to be understood that other modifications and variation can be made without departing the spirit and scope of the invention as hereafter claimed.

## Claims

1. A frame structure applied to a flat panel display, comprising:
a frame having a frame hole to frame said flat panel display and expose a screen of said flat panel display and
a holding apparatus which comprises:
a plurality of fixing components set on a back surface of said frame; and
a plurality of propping components configured on said fixing components;
wherein said propping components can be protruded toward said frame hole to prop a back shell of said flat panel display.

2. The frame structure according to claim 1, wherein said fixing components comprise at least one lock base, and said propping components comprise at least one lock bolt configured through said lock base to protrude toward said frame hole.

3. The frame structure according to claim 1, wherein said fixing components comprise at least one fixing ring, and said propping components comprise at least one cylindrical lock configured through said fixing ring to make a latch bolt of said cylindrical lock to protrude toward said frame hole.

4. The frame structure according to claim 1, wherein said fixing components comprise at least two hangers, and said propping components comprise at least one strap, wherein said strap is configured across said back shell of said flat panel display and two opposite ends of said strap are fixed on said two hangers respectively.

5. The frame structure according to claim 1, wherein said fixing components comprise at least two hangers, and said propping components comprise at least one strap, wherein said strap is configured across said back shell of said flat panel display and two opposite ends of said strap pass through said two hangers respectively and are connected by at least one Velcro.

6. The frame structure according to claim 1, further comprising at least one L-shape strip fixed on at least one corner of said frame.
